(19) Europäisches Patentamt
European Patent Office
Office européen des brevets

(11) **EP 0 588 341 B1**

## (12) EUROPEAN PATENT SPECIFICATION

(45) Date of publication and mention
of the grant of the patent:
**16.12.1998 Bulletin 1998/51**

(21) Application number: 93114923.1

(22) Date of filing: **16.09.1993**

(51) Int Cl.6: **G06F 9/38**, G06F 15/80,
G06F 15/78, G06F 9/30

(54) **Data processor**

Datenprozessor

Processeur de données

(84) Designated Contracting States:
**DE FR GB**

(30) Priority: **18.09.1992 JP 249969/92**

(43) Date of publication of application:
**23.03.1994 Bulletin 1994/12**

(73) Proprietor: **TOYOTA JIDOSHA KABUSHIKI KAISHA**
**Aichi-ken (JP)**

(72) Inventors:
• **Hoshina, Takeshi**
**Setagaya-ku, Tokyo (JP)**
• **Iida, Yoshio**
**Taito-ku, Tokyo (JP)**

(74) Representative: **Tiedtke, Harro, Dipl.-Ing. et al**
**Patentanwaltsbüro**
**Tiedtke-Bühling-Kinne & Partner**
**Bavariaring 4**
**80336 München (DE)**

(56) References cited:
EP-A- 0 085 435          EP-A- 0 359 192
EP-A- 0 594 240          WO-A-89/09447
US-A- 4 760 545          US-A- 5 109 499

• IEE PROCEEDINGS E. COMPUTERS & DIGITAL TECHNIQUES, vol. 139, no. 5 PART E, 1 September 1992 pages 439-449, XP 000319892 STEVEN G B ET AL 'IHARP: A MULTIPLE INSTRUCTION ISSUE PROCESSOR'

**Description**

BACKGROUND OF THE INVENTION

1. Field of the Invention

This invention relates to a data processor and more particularly to a data processor which can perform parallel operations.

2. Description of the Related Art

In recent years, digital technologies have been greatly developed, and data of various kinds is processed at high speed by using digital technologies. However, high-speed and complicated processing requires data processing at higher speed. To meet the requirement, various high-speed operation technologies have been developed and proposed.

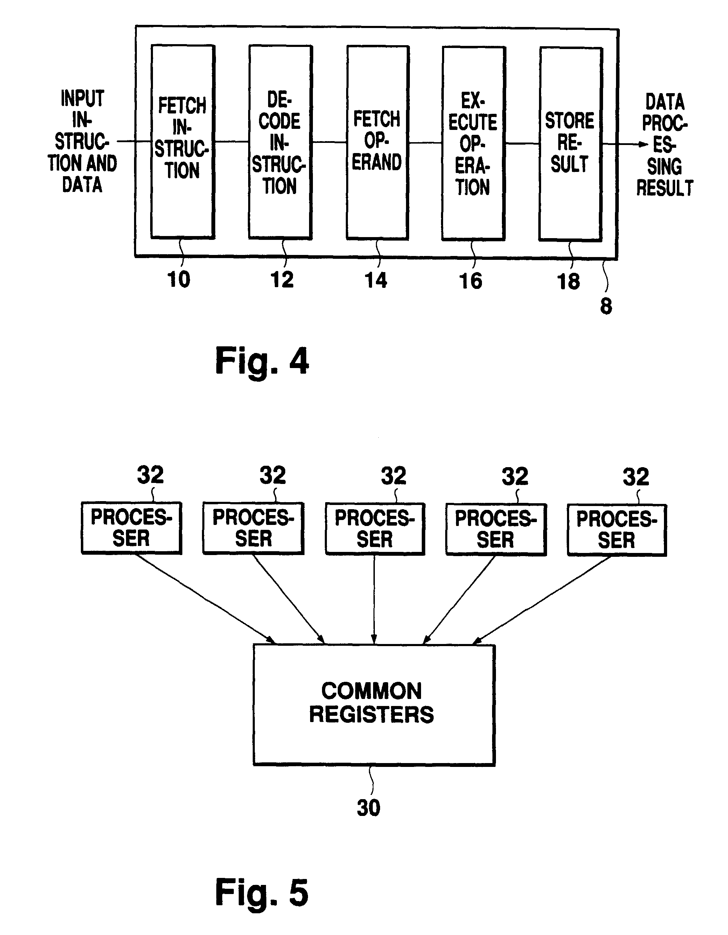

One of the conventional typical high-speed operation technologies is pipeline processing. Figure 4 shows a typical operation flow for pipeline processing. As shown in Figure 4, in data processing by pipeline processing, one processor 8 is divided into a number of processing stages, such as an instruction fetch stage 10, an instruction decode stage 12, an operand fetch stage 14, an operation execution stage 16, and a result store stage 18. The processor 8 can perform simultaneous processing of five instructions by handling a sequence of separate instructions or data at the various stages. For each cycle of the operation clock, the operation corresponding to the instruction is performed at each stage.

When outputs of the processor 8 are observed, one instruction is handled in one cycle as with conventional processors. However, one cycle of the conventional processor is set to the time required to completely handle one instruction, while in the processor 8 to which pipeline processing is applied, one cycle is set to the time needed to perform the operation at each stage. As a result, the operation clock of the processor 8 to which pipeline processing is applied can be set short compared with the conventional processor, or if they are the same in operation clock, the processor 8 to which pipeline processing is applied can perform more complicated operations on the instructions.

Thus, by dividing the processor into a number of processing stages, the operation speed will be improved substantially in proportion to the number of the stages, in theory. In fact, in the event of branch instructions, etc., instructions already read into the pipeline are invalidated, and a new instruction is read from the branch destination. Therefore, when performing branch instructions, etc., the pipeline stream is cut. A pipeline which is too long causes the program execution speed to lower. As a result, a pipeline of about four to six stages is generally often used. A supercomputer or the like is provided with a number of pipelines for a super scaler, etc.

Another conventional high-speed operation technology is multiprocessor technology. Unlike the pipeline technology described above, the multiprocessor technology uses a number of processors. Figure 5 shows the multiprocessor technology. As shown in Figure 5, a number of processors 32 are connected to common registers 30. Generally, the same instruction is supplied to the processors 32 which then perform data processing for different data in the common registers 30. Thus, the operation speed can be provided in proportion to the number of processors, and improvement in the data processing speed can be expected.

An information processing system to which the pipeline technology described above is applied is described in Japanese Patent Laid-Open No.Hei 2-29825, for example. An example of the multiprocessor technology using the central processor and coprocessors is described in Japanese Patent Laid-Open No.Hei 2-32452. The multiprocessor technology described here enables the central processor to supervise execution of the coprocessors.

A parallel processing system having a configuration of switching parallel processing and serial processing is described in Japanese Patent Laid-Open No.Hei 3-129433, for example.

Another high-speed operation technplogy provides a reduced instruction set computer (RISC). An example of such a RISC is described in Japanese Patent Laid-Open No.Sho 63-49843, for example.

The conventional data processors are configured as described above. Thus, to accelerate parallel processing of the super scaler, etc., by further using the pipeline technology, the architecture of the pipeline, etc., becomes extremely complicated, increasing design labor and worsening production yield.

On the other hand, in software design, detailed operation of the pipeline must be understood to produce software which can be accurately controlled.

Further, parallel processing in the multiprocessor system described above requires the same (common) resources that can be accessed by the processors (in the instance mentioned above, common registers). Interprocessor communication is also required to avoid simultaneous accesses to the same resources by the processors or a conflict between the processors. Thus, in a high-speed operation system using the multiprocessor technology, the interprocessor communication state must be sufficiently grasped before processor control software is created.

## SUMMARY OF THE INVENTION

Accordingly, it is an object of the invention to provide a data processor which can switch parallel and serial operations and has an architecture which is simple, interms of manufacturing and design and also facilitates software design.

To these ends, according to one embodiment of the invention, there is provided a data processor according to claim 1.

Therefore, for serial operations, the main operational unit can read/write data from/into all registers and for parallel operations, it can read/write data from/into the dedicated registers thereto and the common registers.

When a serial operation instruction is input, the control section causes only the main operational unit to perform a given operation; when a parallel operation instruction is input, it causes not only the main operational unit, but also other operational units to perform a given operation.

When parallel operation instructions are executed, the dedicated registers are accessed only by the corresponding operational units for reading/writing data. When serial operation instructions are executed, all the dedicated registers can be accessed only by the main operational unit for reading/writing data.

## BRIEF DESCRIPTION OF THE DRAWINGS

In the accompanying drawings:

Figures 1 and 2 are block diagrams of a processor according to one preferred embodiment of the invention;
Figure 3 is a drawing showing which ALU registers are accessed in parallel and serial modes of the processor according to the preferred embodiment of the invention;
Figure 4 is a diagram showing a typical processor operation flow in conventional pipeline technology; and
Figure 5 is a block diagram showing conventional multiprocessor technology.

## DESCRIPTION OF THE PREFERRED EMBODIMENTS

Referring now to the accompanying drawings, there is shown a preferred embodiment of the invention.

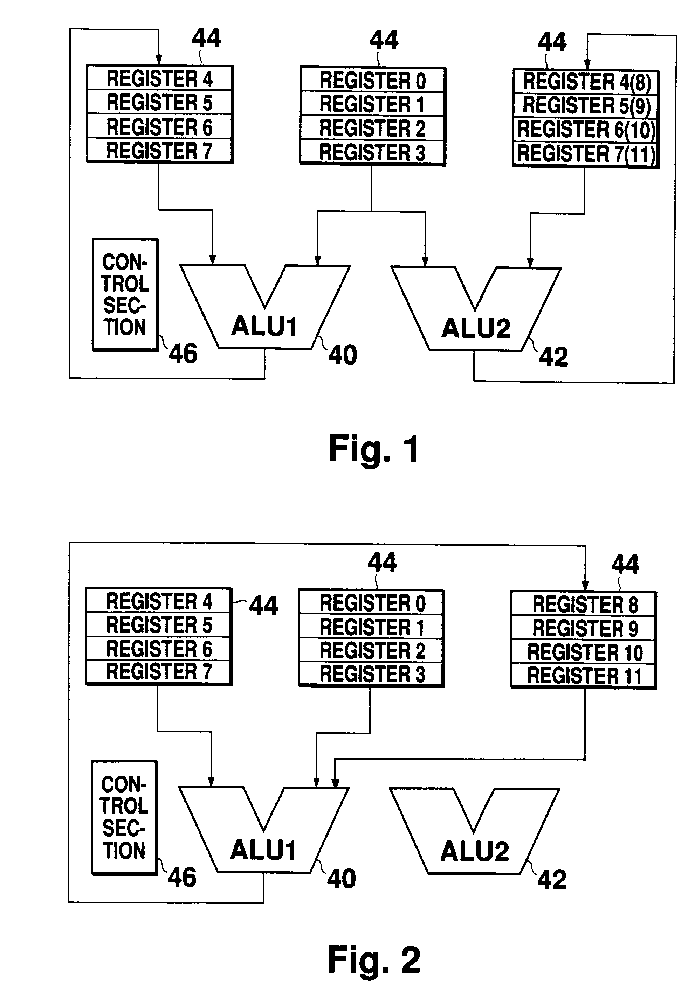

Figures 1 and 2 are block diagrams of a data processor according to one embodiment of the invention. As shown in Figure 1, the data processor according to the embodiment is a central processing unit (CPU) comprising a first arithmetic and logic unit (ALU) 40 and a second ALU 42. It also comprises 12 registers 44-0 to 44-11. It is a control section 46 that controls the first and second ALUs 40 and 42 and the 12 registers 44-0 to 44-11. Instructions input to the CPU in the embodiment having the configuration are classified into serial and parallel operation instructions.

The embodiment is characterized by the fact that the serial operation instructions are executed only by the first ALU 40, which time the second ALU 42 stops. On the other hand, the parallel operation instructions are executed by the first and second ALUs 40 and 42 in parallel at the same time. Whether the input instruction is a serial or parallel operation instruction is determined by the control section 46. The control section 46 determines whether the input instruction is a serial or parallel operation instruction, and controls the operations of the first and second ALUs in response to the determined result.

Shown in Figure 1 is an operation schematic when parallel operation instructions are executed (hereinafter, the state is called the parallel mode). As shown in Figure 1, in the parallel mode, registers 44-0 to 44-3 are connected to the first and second ALUs 40 and 42. Registers 44-4 to 44-7 are connected only to the first ALU 40. Registers 44-8 to 44-11 are connected only to the second ALU 42.

The embodiment is characterized by the fact that two types of register groups are provided in the parallel mode: a common register group connected to both the first and second ALUs, and a dedicated register group connected only to either one of the ALUs. As shown in Figure 1, in the embodiment, the registers 44-0 to 44-3 are common registers, the registers 44-4 to 44-7 are registers dedicated to the first ALU 40, and the registers 44-8 to 44-11 are registers dedicated to the second ALU 42. In the parallel mode, the registers 44-8 to 44-11 dedicated to the second ALU are referenced by the same numbers as the registers 44-4 to 44-7 dedicated to the first ALU. At the time of operation, the same instruction is supplied to the first and second ALUs 40 and 42, thus the register 44-8, for example, is always accessed at the same time as the register 44-4, as described below.

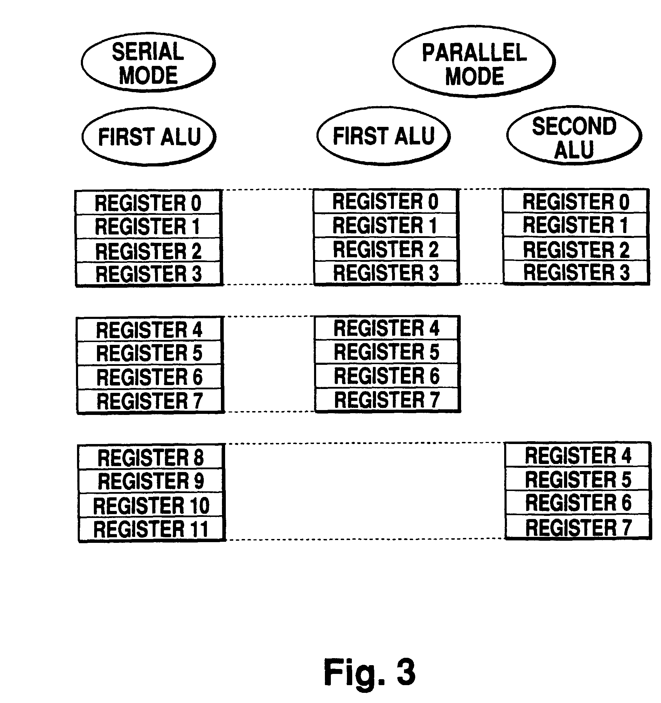

Shown in Figure 2 is an operation schematic for when serial operation instructions are executed (hereinafter, the state is called the serial mode). As shown in Figure 2, in the serial mode, all the registers 44-0 to 44-11 are connected only to the first ALU 40, and the second ALU 42 is disconnected. Figure 3 shows which ALU the registers can be accessed from in both modes.

Described below are the detailed operations where the values of matrix A are multiplied by the values of matrix B to generate matrix C. Assume that the matrix B is input from an I/O port and that the matrix C of the calculation result is also output to the I/O port. The matrices A, B, and C have the following relation:

$$A = \begin{pmatrix} a & b \\ c & d \end{pmatrix} \qquad B = \begin{pmatrix} x \\ y \end{pmatrix} \qquad C = \begin{pmatrix} C_x \\ C_y \end{pmatrix}$$

$$Cx = \{ax + by\}$$

$$Cy = \{cx + dy\}$$

An example program which performs such multiplications is as follows:

| ldi | R4, a; | (1) |
|---|---|---|
| ldi | R5, b; | (2) |
| ldi | R8, c; | (3) |
| ldi | R9, d; | (4) |
| LOOP: | | (5) |
| get | R0; | (6) |
| get | R1; | (7) |
| Fmpy.p | R6, R4, R0 | (8) |
| Fmpy.p | R7, R5, R1 | (9) |
| Fadd.p | R4, R6, R7 | (10) |
| put | R4; | (11) |
| put | R8; | (12) |
| B | LOOP; | (13) |

First, execution of this program is started in the serial mode. The instructions in steps (1) to (4) load a into register 44-4 (R4), b into register 44-5 (R5), c into register 44-8 (R8), and d into register 44-9 (R9). In the description that follows, registers 44 are represented as R0 to R11. The ldi instruction, which represents Load immediate, is a serial operation instruction which loads a given value directly into a given register. Step (5) is a label which represents the beginning of a loop of the operation sequence, as described below.

The instructions in steps (6) and (7) get the values of matrix A from the I/O port and store them in the registers R0 and R1. The get instructions are input/output instructions for getting values from the I/O port.

Thus, a and b are stored in the registers dedicatd to the first ALU (R4 and R5) and c and d are stored in the registers dedicated to the second ALU (R8 and R9) and further x and y of matrix B are stored in the common registers R0 and R1.

Next, actual multiplications are performed: ax and by are executed by the first ALU and cx and dy are executed by the second ALU in parallel.

Steps (8) to (10) are the nucleus of the multiplication operation. Instructions to which a suffix ".p" is given, like the instructions used in these three steps, are parallel operation instructions. At steps (1) to (7), the instructions are executed by the first ALU; at steps (8) to (11), the instructions are executed by both the first and second ALUs 40 and 42.

At step (8), the first ALU 40 multiplies the value of register R0 and the value of register R4 and stores the result in register R6. On the other hand, in the second ALU 42, the registers R4 and R6 are registers R8 and R10 in the serial mode, as described above. Therefore, the second ALU 42 multiplies the values of registers R0 and R8 and stores the result in register R10. Thus, the first ALU 40 executes a * x and the second ALU 42 executes c * x and the results are stored in registers R6 and R10 respectively. Fmpy, which represents Floating Multiply, is a floating-point multiplication instruction.

The instruction in step (9) is also a parallel operation instruction similar to that in step (8). The first ALU 40 multiplies the value of register R1 and the value of register R5 and stores the result in register R7. On the other hand, in the second ALU 42, the registers R5 and R7 are registers R9 and R11 in the serial mode, as described above. Therefore, the second ALU 42 multiplies the values of registers R1 and R9 and stores the result in register R11. Thus, the first ALU 40 executes b * y and the second ALU 42 executes d * y and the results are stored in registers R7 and R11 respectively.

Now, a * x is stored in register R6, c * x in register R10, b * y in register R7, and d * y in register R11.

At step (10), additions are performed. The first and second ALUs 40 and 42 perform the addition in parallel by the parallel operation instruction Fadd.p. The first ALU 40 adds the value of register R7 and the value of register R6 and stores the result in register R4. In the second ALU 42, the registers R6, R7, and R4 are registers R10, R11, and R8 in the serial mode respectively. Therefore, the second ALU 42 multiplies the values of registers R11 and R10 and stores the result in register R8. Thus, the first ALU 40 executes $(a * x) + (b * y)$ and the second ALU 42 executes $(c * x) + (d * y)$ and the results are stored in registers R4 and R8 respectively. The parallel operation instruction Fadd.p, which represents Floating Addition, is a floating-point addition instruction.

Thus, the elements of matrix C, Cx and Cy, which are the multiplication results of matrices A and B, are stored in registers R4 and R8.

The results found by performing the operations are output to the I/O port at steps (11) and (12). The value of the register R4, namely, Cx $(= (a * x) + (b * y))$ is output at step (11) and the value of the register R8, namely, Cy $(= (c * x) + (d * y))$ is output at step (12). The put instructions are instructions executed in the serial mode for outputting the register values to the I/O port.

Finally, the instruction in the step (13) is a branch instruction for branching to the label LOOP and repeating the sequence of operations as described above.

Conventionally, parallel operations required preparation of different programs for each processor unit and supply of dedicated instructions to the processor units. However, according to the embodiment, one processor unit is provided with a number of ALUs, each of which is provided with dedicated registers, thereby performing operations on different data while common instructions are being given to the ALUs. Therefore, the operations at steps (8) to (10) are equivalent to giving the following programs to the first and second ALUs 40 and 42:

| Program to first ALU | Program to second ALU |
| --- | --- |
| Fmpy R6, R4, R0 | Fmpy R10, R8, R0 |
| Fmpy R7, R5, R1 | Fmpy R11, R9, R1 |
| Fadd R4, R6, R7 | Fadd R8, R10, R11 |

Thus, the conventional multiprocessor system would require preparation of separate programs, but according to the embodiment, parallel operations are enabled simply by giving one program.

As described above, according to the embodiment, a CPU is provided which can automatically switch the modes simply by supplying parallel and serial operation instructions. Further, since each ALU is provided with dedicated registers, the ALUs can perform separate operations on different data in the parallel mode. Therefore, communication control to avoid a simultaneous access to common registers (conflict) as with the conventional multiprocessor technology can be extremely simplified, and the CPU structure becomes simple. For the reasons, according to the embodiment, the CPU can perform efficient parallel operations and facilitate program development.

As described above, according to the data processor of the invention, efficient parallel operations and conventional serial operations can be very easily switched by switching the instructions given to the data processor. Since the parallel operation instructions cause the operational units to perform the same operations, one program enables parallel operations to be performed, thereby carrying out parallel operations very easily.

Therefore, the CPU can perform parallel operations very easily without the conventionally required complicated design.

Although the embodiment is an example in which the invention is applied to the CPU, application of the invention to a DSP (digital signal processor) can also produce similar functions and effects.

Although the ALUs are shown as operational units, use of adders as operational units is also preferred for applications where only addition operations are performed.

## Claims

1. A data processor comprising:

   a plurality of operational units (40, 42) including one main operational unit (40);
   dedicated registers (44-4 to 44-7, 44-8 to 44-11) provided for each of said operational units and accessible by the respective operational unit for reading/writing data;
   common registers (44-0 to 44-3) provided for said plurality of operational units and accessible by each of said plurality of operational units for reading/writing data; and
   a control section which controls said plurality of operational units,
   said control section being arranged, when a parallel operation instruction is input, for causing said plurality of operational units to perform the same operation and to access their dedicated registers and when a serial operation instruction is input, for causing only said main operational unit to perform a given operation and to read/write data from/into its dedicated registers and the dedicated registers of other operational units.

2. The data processor as claimed in claim 1 wherein said operational units are ALUs (arithmetic and logic units).

3. The data processor as claimed in claim 1 wherein said operational units are adders.

**Patentansprüche**

1. Datenprozessor mit

    einer Vielzahl von Operationseinheiten (40, 42) mit einer Hauptoperationseinheit (40),
    dedizierten Registern (44-4 bis 44-7, 44-8 bis 44-11) für jede Operationseinheit, auf die durch die jeweilige Operationseinheit zum Lesen/Schreiben von Daten zugegriffen werden kann,
    gemeinsamen Registern (44-0 bis 44-3) für die Vielzahl der Operationseinheiten, auf die durch jede der Vielzahl der Operationseinheiten zum Lesen/Schreiben von Daten zugegriffen werden kann, und
    einem Steuerabschnitt, der die Vielzahl der Operationseinheiten steuert,
    wobei der Steuerabschnitt bei der Eingabe eines parallelen Operationsbefehls bewirkt, daß die Vielzahl der Operationseinheiten die gleiche Operation durchführt und auf ihre dedizierten Register zugreift, und wobei der Steuerabschnitt bei der Eingabe eines seriellen Operationsbefehls bewirkt, daß lediglich die Hauptoperationseinheit eine gegebene Operation durchführt und Daten aus/in ihre dedizierten Register und die dedizierten Register anderer Operationseinheiten liest/schreibt.

2. Datenprozessor nach Anspruch 1, wobei die Operationseinheiten ALUs (Arithmetik-Logik-Einheiten) sind.

3. Datenprozessor nach Anspruch 1, wobei die Operationiseinheiten Addierer sind.

**Revendications**

1. Un processeur de données comprenant :

    - une pluralité d'unités opérationnelles (40, 42) comprenant une unité opérationnelle principale (40) ;
    - des registres dédiés (44-4 à 44-7, 44-8 à 44-11) prévus pour chacune desdites unités operationnelles et susceptibles d'être accédés par les unités opérationnelles respectives pour la lecture/écriture de données ;
    - des registres communs (44-0 à 44-3) prévus pour ladite pluralité d'unités opérationnelles et susceptible d'être accédés par chacune de ladite pluralité d'unités opérationnelles pour la lecture/écriture de données ; et
    - une section de commande réalisant la gestion de ladite pluralité d'unités fonctionnelles, ladite section de commande étant agencée, dans le cas où une instruction impliquant une opération parallèle est reçue en entrée, pour faire que ladite pluralité d'unités opérationnelles réalise la même opération et accède à leurs registres dédiés, et, dans le cas où une instruction impliquant une opération série est reçue en entrée, que seule ladite unité opérationnelle principale réalise une certaine opération et pour lire/écrire des données à partir/vers ses registres dédiés ainsi que les registres dédiés d'autres unités opérationnelles.

2. Le processeur de données selon la revendication 1, dans lequel lesdites unités opérationnelles sont des ALUs (unités d'arithmétique et de logique).

3. Le processeur de données selon la revendication 1, dans lequel lesdites unités opérationnelles sont des additionneurs.

**Fig. 1**

**Fig. 2**

**Fig. 3**

INPUT IN-STRUC-TION AND DATA → FETCH IN-STRUC-TION | DE-CODE IN-STRUC-TION | FETCH OP-ERAND | EX-ECUTE OP-ERA-TION | STORE RE-SULT → DATA PROC-ES-SING RESULT

10    12    14    16    18

8

## Fig. 4

32    32    32    32    32

PROCES-SER | PROCES-SER | PROCES-SER | PROCES-SER | PROCES-SER

COMMON REGISTERS

30

## Fig. 5